# EUROPEAN PATENT APPLICATION

(11) **EP 4 068 836 A1**
(43) Date of publication of application: **05.10.2022**
(21) Application number: 20910009.8
(22) Date of filing: 12.10.2020
(51) Int. Cl.: H04W 24/02

(54) **ACCESS NETWORK SYSTEM, TRANSPORT METHOD, AND RELATED APPARATUS**

(30) Priority: 30.12.2019 CN 201911403283
(71) Applicant: Huawei Technologies Co., Ltd., Shenzhen, Guangdong 518129 (CN)
(72) Inventor: YANG, Rui, Shenzhen, Guangdong 518129 (CN); WEN, Changhui, Shenzhen, Guangdong 518129 (CN); LIN, Gang, Shenzhen, Guangdong 518129 (CN); WANG, Ziqiang, Shenzhen, Guangdong 518129 (CN)
(74) Representative: Epping - Hermann - Fischer
(86) International application number: PCT/CN2020/120351
(87) International publication number: WO 2021/135490

(57) **Abstract**

Embodiments of this application disclose an access network system, a transmission method, and a related device, to reduce access network devices on a backhaul access ring, and improve efficiency of managing and controlling service data by the access ring. At least one first access network device and at least two second access network devices are included, where the first access network device includes a first baseband unit BBU, and the second base station includes a second baseband unit BBU. At least one first baseband unit BBU and at least two second baseband units BBUs are connected in series to form a closed loop. The second baseband unit BBU is configured to determine a bandwidth requirement of the second access network device. The first baseband unit BBU is configured to: obtain, from a plurality of second baseband units BBUs, bandwidth requirements of second access network devices corresponding to the second baseband units BBUs, and determine a bandwidth available to each second access network device.

## Description

This application claims priority to Chinese Patent Application No. 201911403283.3, filed with the China National Intellectual Property Administration on December 30, 2019 and entitled "ACCESS NETWORK SYSTEM, TRANSMISSION METHOD, AND RELATED DEVICE", which is incorporated herein by reference in its entirety.

### TECHNICAL FIELD

Embodiments of this application relate to the communication field, and in particular, to an access network system, a transmission method, and a related device.

### BACKGROUND

An IP radio access network (IP radio access network, IP RAN) is an IP network technology that satisfies IP layer reachability between a base station and a core network based on the internet protocol (internet protocol, IP)/multi-protocol label switching (multi-protocol label switching, MPLS) protocol and key technologies, to meet a wireless backhaul requirement. The IP RAN mainly includes an access layer, an aggregation layer, and a core layer. Because both devices at the access layer and devices at the aggregation layer use a ring networking mode, the access layer and the aggregation layer are also referred to as an access ring and an aggregation ring respectively.

Currently, a plurality of access transport network (access transport network, ATN) devices are connected in series to form an access ring, and each ATN device is connected to a base station, so that the ATN device can forward data received from the base station.

With 5G construction, service traffic of base stations increases sharply. However, because the ATN device exchanges data only with one base station, the ATN device cannot sense service traffic of another base station, that is, the access ring and the base stations are independent of each other. Consequently, efficiency of managing and controlling service traffic by the access ring is low.

### SUMMARY

Embodiments of this application provide an access network system, a transmission method, and a related device, to reduce access network devices on a backhaul access ring, and improve efficiency of managing and controlling service data by the access ring.

According to a first aspect, an embodiment of this application provides an access network device, including: at least one first access network device and at least two second access network devices, where the first access network device includes a first baseband unit BBU, and the second base station includes a second baseband unit BBU. At least one first baseband unit BBU and at least two second baseband units BBUs are connected in series to form a closed loop. The second baseband unit BBU is configured to determine a bandwidth requirement of the second access network device. The first baseband unit BBU is configured to: obtain, from a plurality of second baseband units BBUs, bandwidth requirements of second access network devices corresponding to the second baseband units BBUs, and determine a bandwidth available to each second access network device.

The access network device in this embodiment may be referred to as an access ring device.

In this embodiment of this application, a bandwidth management and control function is directly integrated into the first baseband unit BBU in the first access network device and the second baseband unit BBU in the second access network device, and ring networking is directly performed based on the first baseband unit BBU and the plurality of second baseband units BBUs. In this way, in addition to sensing a bandwidth requirement of the first access network device, the first baseband unit BBU may obtain the bandwidth requirement of the second access network device directly from the second baseband unit BBU, and allocate a bandwidth to each second access network device. Therefore, bandwidth allocation of access network devices can be optimized, efficiency of forwarding between the access network devices in an access ring can be improved, and network congestion can be alleviated.

With reference to the first aspect, in a first implementation of the first aspect of embodiments of this application, the first baseband unit BBU is further configured to determine, based on the bandwidth available to each second access network device, a service data transmission path from at least one second access network device to the first access network device and service data between every two second access network devices on the path; and the second baseband unit BBU is further configured to forward service data of the second access network device based on the service data transmission path.

In this implementation, it may also be understood as that the second baseband unit BBU is further configured to forward the service data of the second access network device to another second baseband unit BBU based on the service data transmission path.

In this implementation, it may also be understood as that the second baseband unit BBU is further configured to forward the service data of the second access network device to the first baseband unit BBU based on the service data transmission path.

In this implementation, because a routing and forwarding function is further provided to the first baseband unit BBU, the first baseband unit BBU may determine, based on the bandwidth available to each second access network device, the service data transmission path from the at least one second access network device to the first access network device and the service data between every two second access network devices on the path. In this case, the second baseband unit BBU is further configured to forward the service data of the second access network device based on the service data transmission path. Because both the forwarding path and the forwarded service data are determined by the first baseband unit BBU based on the bandwidth requirement of each second access network device, route forwarding efficiency is improved, and network congestion is alleviated.

With reference to the first aspect or the first implementation of the first aspect, in a second implementation of the first aspect of embodiments of this application, the first baseband unit BBU includes a first universal main processing and transmission unit UMPT, and the second baseband unit BBU includes a second universal main processing and transmission unit UMPT. That at least one first baseband unit BBU and at least two second baseband units BBUs are connected in series to form a closed loop includes: At least one first universal main processing and transmission unit UMPT and at least two second universal main processing and transmission units UMPTs are connected in series to form a closed loop.

In this implementation, as further defined, a connection between baseband units BBUs is actually a connection between universal main processing and transmission units UMPTs in the baseband units BBUs. This implementation puts forward a specific connection mode, and improves feasibility of the solution.

With reference to the first aspect, the first implementation of the first aspect, and the second implementation of the first aspect, in a third implementation of the first aspect of embodiments of this application, the first baseband unit BBU is connected to an aggregation-layer network device.

In this implementation, the first baseband unit BBU is connected to the aggregation-layer network device, so that an access network system (that is, the access ring) including at least one first baseband unit BBU and at least two second baseband units may be connected to the aggregation-layer network device, that is, the access network system (that is, the access ring) may be connected to an aggregation layer (that is, an aggregation ring).

With reference to the first aspect, the first implementation of the first aspect, and the second implementation of the first aspect, in a fourth implementation of the first aspect of embodiments of this application, in the access network system, at least one second access network device is connected to another second access network device.

As proposed in this implementation, the at least one second access network device in the access network system is connected to another second access network device. This helps increase a transmission link between the second access network devices, improve efficiency of forwarding between access network devices, and alleviate network congestion. According to a second aspect, an embodiment of this application provides a first baseband unit BBU, where the first baseband unit is located in the first access network device in the foregoing access network system, and the first baseband unit BBU is connected to at least two second baseband units BBUs. Specifically, the first baseband unit BBU includes a control module and a transmission module. The control module is configured to: obtain, from a plurality of second baseband units BBUs, bandwidth requirements of second access network devices corresponding to the second baseband units BBUs, and determine a bandwidth available to each second access network device. The control module is further configured to determine, based on the bandwidth available to each second access network device, a service data transmission path from at least one second access network device to the first access network device and service data between every two second access network devices on the path. The transmission module is configured to forward, based on the service data transmission path, service data to the second baseband unit BBU through a transmission interface.

In this embodiment of this application, a bandwidth management and control function is directly integrated into the first baseband unit BBU in the first access network device. Therefore, in addition to sensing a bandwidth requirement of the first access network device, the first baseband unit BBU may further obtain the bandwidth requirement of the second access network device directly from the second baseband unit BBU, and allocate a bandwidth to each second access network device. Therefore, bandwidth allocation of access network devices can be optimized, efficiency of forwarding between the access network devices in an access ring can be improved, and network congestion can be alleviated. In addition, because a routing and forwarding function is further provided to the first baseband unit BBU, the first baseband unit BBU may determine, based on the bandwidth available to each second access network device, the service data transmission path from the at least one second access network device to the first access network device and the service data between every two second access network devices on the path. In this case, the second baseband unit BBU is further configured to forward the service data of the second access network device based on the service data transmission path. Because both the forwarding path and the forwarded service data are determined by the first baseband unit BBU based on the bandwidth requirement of each second access network device, route forwarding efficiency is improved, and network congestion is alleviated.

With reference to the second aspect, in a first implementation of the second aspect of embodiments of this application, the transmission module is further configured to send the service data to an aggregation-layer network device.

In this implementation, the first baseband unit BBU is connected to the aggregation-layer network device. Therefore, the first baseband unit BBU may send the service data to the aggregation-layer network device, so that the access network system (that is, the access ring) may be connected to the aggregation-layer network device. Further, the access network system (that is, the access ring) may forward data to an aggregation layer (that is, an aggregation ring). With reference to the second aspect or the first implementation of the second aspect, in a second implementation of the second aspect of embodiments of this application, the first baseband unit BBU includes a first universal main processing and transmission unit UMPT, and the transmission module and the control module are located in the first universal main processing and transmission unit UMPT.

This implementation further describes an internal structure of the first baseband unit BBU, where the transmission module and the control module are located in the first universal main processing and transmission unit UMPT. With reference to the second implementation of the second aspect, in a third implementation of the second aspect of embodiments of this application, the first universal main processing and transmission unit UMPT includes at least three transmission interfaces.

In this implementation, it may be understood that the first universal main processing and transmission unit UMPT is configured with three transmission interfaces, the first universal main processing and transmission unit UMPT is configured with four transmission interfaces, the first universal main processing and transmission unit UMPT is configured with five transmission interfaces, or the first universal main processing and transmission unit UMPT is configured with six transmission interfaces.

Further, the first universal main processing and transmission unit UMPT includes at least four transmission interfaces. In this implementation, a quantity of transmission interfaces of the first universal main processing and transmission unit UMPT is specified. When the quantity of transmission interfaces of the first universal main processing and transmission unit UMPT is 3, two of the three transmission interfaces are separately configured to connect different second baseband units BBUs, and the third transmission interface is used as a backup. Alternatively, two of the three transmission interfaces are separately configured to connect a second baseband unit BBU and another first baseband unit BBU, and the third transmission interface is used as a backup. This is not specifically limited herein. In this implementation, a plurality of optional solutions are provided for the foregoing transmission interfaces, which helps make connections between baseband units BBUs in the access network system (that is, the access ring) reliable. With reference to the second aspect, and the first to the third implementations of the second aspect, in a fourth implementation of the first aspect of embodiments of this application, the first baseband unit BBU sends a forwarding instruction to the second baseband unit BBU, where the forwarding instruction includes a service data transmission path from the second baseband unit BBU to the first baseband unit BBU and service data between every two second access network devices on the path.

As proposed in this implementation, the first baseband unit BBU may send the forwarding instruction to the second baseband unit BBU, to indicate the service data transmission path from the second baseband unit BBU to the first baseband unit BBU and the service data between every two second access network devices on the path. This helps the second baseband unit BBU forward the service data according to the forwarding instruction.

According to a third aspect, an embodiment of this application provides a second baseband unit BBU, where the second baseband unit is located in a second access network device in the foregoing access network system, and the second baseband unit BBU is connected to at least two second baseband units BBUs, or the second baseband unit BBU is connected to at least one first baseband unit BBU and at least one second baseband unit BBU. Specifically, the second baseband unit BBU includes a transmission module. The transmission module is configured to receive, through a first transmission interface, service data forwarded by a first baseband unit BBU. The transmission module is further configured to receive a forwarding instruction from a first access network device, and forward the service data to another second baseband unit BBU through a second transmission interface, where the forwarding instruction includes a service data transmission path from the second baseband unit BBU to the first baseband unit BBU and service data between every two second access network devices on the path.

In this embodiment of this application, the second baseband unit BBU may receive the forwarding instruction from the first access network device, and forward the service data to another second baseband unit BBU through the second transmission interface. This helps improve efficiency of forwarding between access network devices in an access ring and alleviate network congestion.

With reference to the third aspect, in a first implementation of the third aspect of embodiments of this application, the second baseband unit BBU further includes a control module, configured to determine a bandwidth requirement of a second access network device corresponding to the second baseband unit BBU. The transmission module is further configured to send the bandwidth requirement to the first baseband unit.

In this implementation, the second baseband unit BBU may also have a bandwidth management and control function to optimize bandwidth allocation between access network devices, improve efficiency of forwarding between the access network devices in the access ring, and alleviate network congestion. In addition, when a fault occurs in the first baseband unit BBU currently, the second baseband unit BBU may enable the bandwidth management and control function and a routing and forwarding function, to ensure that forwarding efficiency of the access network system (that is, an access ring) is not affected.

With reference to the third aspect or the first implementation of the third aspect, in a second implementation of the third aspect of embodiments of this application, the second baseband unit BBU includes a second universal main processing and transmission unit UMPT, and the transmission module and the control module are located in the second universal main processing and transmission unit UMPT.

This implementation further describes an internal structure of the second baseband unit BBU, where the transmission module and the control module are located in the second universal main processing and transmission unit UMPT.

With reference to the second implementation of the third aspect, in a third implementation of the third aspect of embodiments of this application, the second universal main processing and transmission unit UMPT includes at least three transmission interfaces, where the at least three transmission interfaces include the first transmission interface and the second transmission interface.

In this implementation, it may be understood that the second universal main processing and transmission unit UMPT is configured with three transmission interfaces, the second universal main processing and transmission unit UMPT is configured with four transmission interfaces, the second universal main processing and transmission unit UMPT is configured with five transmission interfaces, or the second universal main processing and transmission unit UMPT is configured with six transmission interfaces.

Further, the second universal main processing and transmission unit UMPT includes at least four transmission interfaces.

In this implementation, a quantity of transmission interfaces of the second universal main processing and transmission unit UMPT is specified. When the quantity of transmission interfaces of the second universal main processing and transmission unit UMPT is 3, two of the three transmission interfaces are separately configured to connect different second baseband units BBUs, and the third transmission interface is used as a backup. Alternatively, two of the three transmission interfaces are separately configured to connect a second baseband unit BBU and another first baseband unit BBU, and the third transmission interface is used as a backup. This is not specifically limited herein. In this implementation, a plurality of optional solutions are provided for the foregoing transmission interfaces, which helps make connections between baseband units BBUs in the access network system (that is, the access ring) reliable. According to a fourth aspect, an embodiment of this application provides a transmission method. The transmission method is based on the access network system in the first aspect and any implementation of the first aspect, the first baseband unit BBU in the second aspect and any implementation of the second aspect, and the second baseband unit BBU in the third aspect and any implementation of the third aspect. Specifically, the transmission method includes: A first baseband unit BBU obtains, from at least two second baseband units BBUs, bandwidth requirements of second access network devices corresponding to the second baseband units BBUs, where at least one first baseband unit BBU and the at least two second baseband units BBUs are connected in series to form a closed loop, the first baseband unit BBU is included in a first access network device, and the second baseband unit BBU is included in the second access network device; and the first baseband unit BBU determines, based on the bandwidth requirements of the at least two second access network devices, a bandwidth available to each second access network device.

In this implementation, a structure of the first baseband unit BBU may be based on the second aspect or any implementation of the second aspect.

In this implementation, a structure of the second baseband unit BBU may be based on the third aspect or any implementation of the third aspect.

In this embodiment of this application, a bandwidth management and control function is directly integrated into the first baseband unit BBU in the first access network device and the second baseband unit BBU in the second access network device, and ring networking is directly performed based on the first baseband unit BBU and the plurality of second baseband units BBUs. In this way, in addition to sensing a bandwidth requirement of the first access network device, the first baseband unit BBU may obtain the bandwidth requirement of the second access network device directly from the second baseband unit BBU, and allocate a bandwidth to each second access network device. Therefore, bandwidth allocation of access network devices can be optimized, efficiency of forwarding between the access network devices in an access ring can be improved, and network congestion can be alleviated.

With reference to the fourth aspect, in a first implementation of the fourth aspect of embodiments of this application, the method further includes: the first baseband unit BBU determines, based on the bandwidth available to each second access network device, a service data transmission path from at least one second access network device to the first access network device and service data between every two second access network devices on the path; and the first baseband unit BBU forwards service data of the second access network device based on the service data transmission path.

In this implementation, because a routing and forwarding function is further provided to the first baseband unit BBU, the first baseband unit BBU may determine, based on the bandwidth available to each second access network device, the service data transmission path from the at least one second access network device to the first access network device and the service data between every two second access network devices on the path. In this case, a second baseband unit BBU forwards the service data of the second access network device based on the service data transmission path. Because both the forwarding path and the forwarded service data are determined by the first baseband unit BBU based on the bandwidth requirement of each second access network device, route forwarding efficiency is improved, and network congestion is alleviated.

According to a fifth aspect, an embodiment of this application provides a transmission method. The transmission method is based on the access network system in the first aspect and any implementation of the first aspect, the first baseband unit BBU in the second aspect and any implementation of the second aspect, and the second baseband unit BBU in the third aspect and any implementation of the third aspect. Specifically, the transmission method includes: A second baseband unit BBU sends first data to a first baseband unit BBU; and the second baseband unit BBU retransmits the first data to the first baseband unit BBU if the second baseband unit BBU does not receive, before a first timer expires, a response sent by the first baseband unit BBU, where duration of the first timer is determined by service data transmitted between the first baseband unit BBU and the second baseband unit BBU, and the service data includes the first data.

In this embodiment, the networking mode in the first aspect is used, and the first timer of the second baseband unit BBU is determined by the service data transmitted between the first baseband unit BBU and the second baseband unit BBU. Therefore, the first timer may be adjusted based on an actual service data transmission status. This can avoid a case in which forwarding efficiency is reduced as a data transmission delay is increased with excessively long duration of the first timer determined by the baseband unit BBU. Therefore, this helps improve efficiency of forwarding between baseband units BBUs, that is, improve efficiency of forwarding between access network devices in an access ring, and alleviate network congestion.

With reference to the fifth aspect, in a first implementation of the fifth aspect of embodiments of this application, the method further includes: The second baseband unit BBU restarts the first timer when the second baseband unit BBU retransmits the first data to the first baseband unit BBU.

In this implementation, the second baseband unit BBU restarts the first timer, which helps record time for the second baseband unit BBU to wait for a response, and avoids network congestion caused by an excessively long delay due to timeout when there is no timer.

With reference to the first implementation of the fifth aspect, in a second implementation of the fifth aspect of embodiments of this application, after the second baseband unit BBU restarts the first timer, the method further includes: stopping the first timer when the second baseband unit BBU receives a first response sent by the first baseband unit BBU, where the first response is used to indicate to stop the first timer.

In this embodiment, because the first baseband unit BBU sends the first response to the second baseband unit BBU, and the second baseband unit BBU receives the first response within the duration of the first timer, the second baseband unit BBU may stop the first timer when receiving the first response.

With reference to the fifth aspect, the first implementation of the fifth aspect, and the second implementation of the fifth aspect, in a third implementation of the fifth aspect of embodiments of this application, before the second baseband unit BBU sends the first data to the first baseband unit BBU, the method further includes: The second baseband unit BBU receives a forwarding instruction from the first baseband unit BBU, where the forwarding instruction includes a service data transmission path from the second baseband unit BBU to the first baseband unit BBU and service data between every two second access network devices on the path; and the second baseband unit BBU determines the duration of the first timer according to the forwarding instruction.

In this implementation, as further proposed, the first timer is determined according to the forwarding instruction, and the forwarding instruction includes the service data transmission path from the second baseband unit BBU to the first baseband unit BBU and the service data between every two second access network devices on the path. Therefore, the first timer may be adjusted based on an actual service data transmission status. This can avoid a case in which forwarding efficiency is reduced as a data transmission delay is increased with excessively long duration of the first timer determined by the baseband unit BBU. Therefore, this helps improve efficiency of forwarding between baseband units BBUs, that is, improve efficiency of forwarding between access network devices in the access ring, and alleviate network congestion.

According to a sixth aspect, an embodiment of this application provides a transmission method. The transmission method is based on the access network system in the first aspect and any implementation of the first aspect, the first baseband unit BBU in the second aspect and any implementation of the second aspect, and the second baseband unit BBU in the third aspect and any implementation of the third aspect. The transmission method includes: A first baseband unit BBU receives first data from a second baseband unit BBU; the first baseband unit BBU sends the first data to an aggregation-layer network device; and the first baseband unit sends a first response to the second baseband unit BBU, where the first response is used to indicate that the first baseband unit BBU has sent the first data to the aggregation-layer network device.

In this embodiment, a ring networking mode is used, and a bandwidth management and control function and a routing and forwarding function are directly integrated into baseband units BBUs in access network devices, so that data can be forwarded between the baseband units BBUs. This helps improve efficiency of forwarding between access network devices in an access ring and alleviate network congestion.

With reference to the sixth aspect, in a first implementation of the sixth aspect of embodiments of this application, the first baseband unit BBU sends a forwarding instruction to the second baseband unit BBU, where the forwarding instruction includes a service data transmission path from the second baseband unit BBU to the first baseband unit BBU and service data between every two second access network devices on the path, so that the second baseband unit BBU determines duration of a first timer according to the forwarding instruction, where the duration of the first timer is determined based on service data transmitted between the first baseband unit BBU and the second baseband unit BBU, and the service data includes the first data.

In this embodiment, the networking mode in the first aspect is used, and the first timer of the second baseband unit BBU is determined by the service data transmitted between the first baseband unit BBU and the second baseband unit BBU. Therefore, the first timer may be adjusted based on an actual service data transmission status. This can avoid a case in which forwarding efficiency is reduced as a data transmission delay is increased with excessively long duration of the first timer determined by the baseband unit BBU. Therefore, this helps improve efficiency of forwarding between baseband units BBUs, that is, improve efficiency of forwarding between access network devices in the access ring, and alleviate network congestion.

According to a seventh aspect, an embodiment of this application provides a communication device. The communication device may be the first access network device in the foregoing implementations, or may be a chip in the first access network device. The communication device may include a processing module and a transceiver module. When the communication device is a first access network device, the processing module may be a processor, the processor may include a first baseband unit BBU, and the transceiver module may be a transceiver. The first access network device may further include a storage module, and the storage module may be a memory. The storage module is configured to store instructions, and the processing module executes the instructions stored in the storage module, so that the first access network device performs the method according to any one of the fourth aspect or the implementations of the fourth aspect, the fifth aspect or the implementations of the fifth aspect, or the sixth aspect or the implementations of the sixth aspect. When the communication device is a chip in the first access network device, for example, when the communication device is a chip in a baseband unit BBU in the first access network device, the processing module may be a processor, and the transceiver module may be an input/output interface, a pin, a circuit, or the like. The processing module executes instructions stored in a storage module, so that the first access network device performs the method according to any one of the fourth aspect or the implementations of the fourth aspect, the fifth aspect or the implementations of the fifth aspect, or the sixth aspect or the implementations of the sixth aspect. The storage module may be a storage module (for example, a register or a cache) in the chip, or may be a storage module (for example, a read-only memory or a random access memory) that is in the access network device and that is located outside the chip.

According to an eighth aspect, an embodiment of this application provides a communication device. The communication device may be the second access network device in the foregoing implementations, or may be a chip in the second access network device. The communication device may include a processing module and a transceiver module. When the communication device is a second access network device, the processing module may be a processor, the processor may include a second baseband unit BBU, and the transceiver module may be a transceiver. The second access network device may further include a storage module, and the storage module may be a memory. The storage module is configured to store instructions, and the processing module executes the instructions stored in the storage module, so that the second access network device performs the method according to any one of the fourth aspect or the implementations of the fourth aspect, the fifth aspect or the implementations of the fifth aspect, or the sixth aspect or the implementations of the sixth aspect. When the communication device is a chip in the second access network device, for example, when the communication device is a chip in a baseband unit BBU in the second access network device, the processing module may be a processor, and the transceiver module may be an input/output interface, a pin, a circuit, or the like. The processing module executes instructions stored in a storage module, so that the second access network device performs the method according to any one of the fourth aspect or the implementations of the fourth aspect, the fifth aspect or the implementations of the fifth aspect, or the sixth aspect or the implementations of the sixth aspect. The storage module may be a storage module (for example, a register or a cache) in the chip, or may be a storage module (for example, a read-only memory or a random access memory) that is in the access network device and that is located outside the chip.

According to a ninth aspect, this application provides a communication apparatus. The apparatus may be an integrated circuit chip, and is configured to implement a function of the first baseband unit BBU.

According to a tenth aspect, this application provides a communication apparatus. The apparatus may be an integrated circuit chip, and is configured to implement a function of the second baseband unit BBU.

According to an eleventh aspect, an embodiment of this application provides a computer program product including instructions. When the computer program product runs on a computer, the computer performs the method according to any one of the fourth aspect or the implementations of the fourth aspect, the fifth aspect or the implementations of the fifth aspect, or the sixth aspect or the implementations of the sixth aspect.

According to a twelfth aspect, an embodiment of this application provides a computer-readable storage medium, including instructions. When the instructions are run on a computer, the computer performs the method according to any one of the fourth aspect or the implementations of the fourth aspect, the fifth aspect or the implementations of the fifth aspect, or the sixth aspect or the implementations of the sixth aspect.

It can be learned from the foregoing technical solutions that embodiments of this application have the following advantages:
In embodiments of this application, the bandwidth management and control function is directly integrated into the first baseband unit BBU in the first access network device and the second baseband unit BBU in the second access network device, and ring networking is directly performed based on the first baseband unit BBU and the plurality of second baseband units BBUs. In this way, in addition to sensing the bandwidth requirement of the first access network device, the first baseband unit BBU may obtain the bandwidth requirement of the second access network device directly from the second baseband unit BBU, and allocate a bandwidth to each second access network device.

Therefore, bandwidth allocation of access network devices can be optimized, efficiency of forwarding between the access network devices in the access ring can be improved, and network congestion can be alleviated.

### BRIEF DESCRIPTION OF DRAWINGS

To describe the technical solutions in embodiments of this application more clearly, the following briefly describes the accompanying drawings for describing embodiments. It is clear that the accompanying drawings in the following description show merely some embodiments of this application.
FIG. 1 is a schematic architectural diagram of an existing IP RAN;
FIG. 2A is an architectural diagram of an access network system according to an embodiment of this application;
FIG. 2B is another architectural diagram of an access network system according to an embodiment of this application;
FIG. 3A is a schematic diagram of an embodiment of a first baseband unit BBU according to an embodiment of this application;
FIG. 3B is a schematic diagram of another embodiment of a first baseband unit BBU according to an embodiment of this application;
FIG. 4A is a schematic diagram of an embodiment of a second baseband unit BBU according to an embodiment of this application;
FIG. 4B is a schematic diagram of another embodiment of a second baseband unit BBU according to an embodiment of this application;
FIG. 4C is a simplified schematic connection diagram of an access network system according to an embodiment of this application;
FIG. 5 is a flowchart of a transmission method according to an embodiment of this application;
FIG. 6 is another flowchart of a transmission method according to an embodiment of this application;
FIG. 7 is another flowchart of a transmission method according to an embodiment of this application;
FIG. 8 is another flowchart of a transmission method according to an embodiment of this application;
FIG. 9 is a schematic diagram of an embodiment of a communication device according to an embodiment of this application; and
FIG. 10 is a schematic diagram of another embodiment of a communication device according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In the specification, claims, and accompanying drawings of this application, terms "first", "second", "third", "fourth", and the like (if existent) are intended to distinguish between similar objects but do not necessarily indicate a specific order or sequence. It should be understood that the data termed in such a way are interchangeable in appropriate circumstances, so that the embodiments described herein can be implemented in other orders than the order illustrated or described herein. In addition, terms such as "include", "have", and any variations thereof are intended to cover nonexclusive inclusions, for example, a process, method, system, product, or device that includes a series of steps or units is not necessarily limited to those clearly listed steps or units, but may include other steps or units that are not clearly listed or inherent to such a process, method, product, or device.

Embodiments of this application provide an access network system, a transmission method, and a related device, to reduce access network devices on a backhaul access ring, and improve efficiency of managing and controlling service data by the access ring.

To facilitate description of the access network system provided in embodiments of this application, the following first describes an existing network architecture.

Currently, wireless base station backhaul can be performed by using the IP radio access network (internet protocol radio access network, IP RAN) solution. The IP RAN is an IP network that is applicable to a plurality of transmission media and in which an operation, administration and maintenance (operation, administration and maintenance, OAM) function and a quality of service (quality of service, QoS) mechanism are further provided to meet IP layer reachability between an access network device (for example, a base station) and a core network, to implement a wireless backhaul requirement. The IP RAN includes an access layer and an aggregation layer. The access layer and the aggregation layer each use a ring networking mode. Therefore, the access layer may also be referred to as an access ring, and the aggregation layer may also be referred to as an aggregation ring.

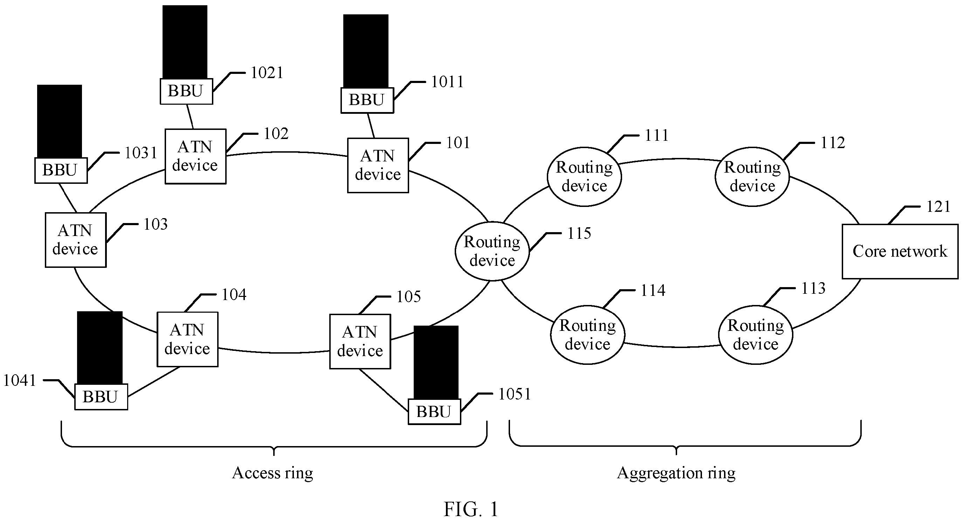

Specifically, FIG. 1 is a schematic diagram of an IP RAN, where the IP RAN includes an access ring and an aggregation ring. The access ring includes a plurality of access transport network (access transport network, ATN) devices, for example, an ATN device 101, an ATN device 102, an ATN device 103, an ATN device 104, and an ATN device 105 in FIG. 1. The plurality of ATN devices and one routing device 115 are connected in series to form a ring. Each of the plurality of ATN devices is connected to one base station. This may also be understood as that each of the plurality of ATN devices is connected to one baseband unit (baseband unit, BBU). For example, in FIG. 1, the ATN device 101 is connected to a baseband unit BBU 1011 in the base station, the ATN device 102 is connected to a baseband unit BBU 1012 in a base station, the ATN device 103 is connected to a baseband unit BBU 1013 in a base station, the ATN device 104 is connected to a baseband unit BBU 1014 in a base station, and the ATN device 105 is connected to a baseband unit BBU 1015 in a base station. In addition, the aggregation ring includes a plurality of routing devices, for example, a routing device 111, a routing device 112, a routing device 113, and a routing device 114. The plurality of routing devices, the routing device 115 in the access ring, and the core network 121 are connected in series to form a closed loop. The ATN device 101/102/103/104/105 may be an ATN integrated service access router, and may be a case-shaped device positioned at an edge of a metropolitan area network and oriented to multi-service access. The routing device 111/112/113/114/115 may be an integrated service carrier router (carrier X router, CX router), and are configured to provide an end-to-end multi-service integrated bearer solution.

In addition, the devices in the access ring and the aggregation ring may be used as logical gateways. Specifically, the ATN device may serve as a cell site gateway (cell site gateway, CSG), a routing device at a boundary between the access ring and the aggregation ring may serve as an aggregation site gateway (aggregation site gateway, ASG), and a routing device in the aggregation ring may serve as a radio network controller (radio network controller, RNC) site gateway (RNC site gateway, RSG). In this network architecture, mobile backhaul maintenance personnel can maintain and manage networks between the CSG gateway, the ASG gateway, and the RSG gateway. With 5G construction, service traffic of base stations increases sharply. However, because the ATN device exchanges data only with one base station, the ATN device cannot sense service traffic of another base station. For example, the ATN device 101 is connected only to the baseband unit BBU 1011, that is, the ATN device 101 exchanges data only with a base station in which the baseband unit BBU 1011 is located, and the ATN device 101 cannot sense service traffic of another base station. Therefore, the access ring and the base stations are independent of each other. Consequently, efficiency of managing and controlling service traffic by the access ring is low.

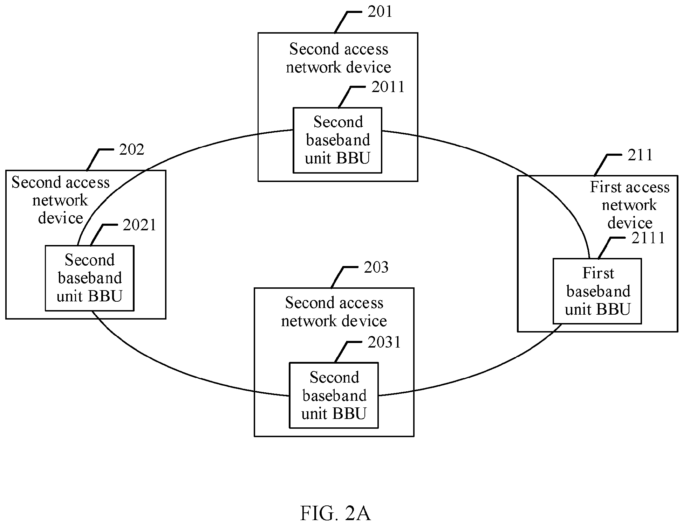

In view of this, an embodiment of this application provides an access network system, to reduce access network devices on a backhaul access ring, and improve efficiency of managing and controlling service data by the access ring. Specifically, as shown in FIG. 2A, the access network system includes:
at least one first access network device and at least two second access network devices, where the first access network device includes a first baseband unit BBU, and the second base station includes a second baseband unit BBU. At least one first baseband unit BBU and at least two second baseband units BBUs are connected in series to form a closed loop.

For ease of subsequent description, this embodiment and subsequent embodiments are described by using an example in which the access network system includes one first access network device 211 and three second access network devices 201, 202, and 203. In addition, the access network system provided in this embodiment of this application may also be referred to as the access ring. A name of the access network system in actual application is not specifically limited herein.

In addition, an access network device (for example, the first access network device or the second access network device) in this embodiment includes a base station or an access point in a broad sense, and may be a device that communicates with a wireless terminal device over an air interface in an access network by using one or more cells. The access network device may be configured to: mutually convert a received over-the-air frame and an internet protocol (IP) packet, and serve as a router between the terminal device and a remaining part of the access network, where the remaining part of the access network may include an IP network. The access network device may further coordinate attribute management of the air interface. For example, the access network device may include an evolved NodeB (evolved NodeB, NodeB, eNB, or e-NodeB) in a long term evolution (long term evolution, LTE) system or an LTE-advanced (LTE-Advanced, LTE-A) system, may include a next generation NodeB (next generation NodeB, gNB) in a fifth generation (fifth generation, 5G) new radio (new radio, NR) system, or may include a centralized unit (centralized unit, CU) and a distributed unit (distributed unit, DU) in a cloud radio access network (Cloud RAN) system. This is not limited in embodiments of this application.

As shown in FIG. 2A, each first access network device in the foregoing access network system includes one first baseband unit BBU. For example, the first access network device 211 includes a first baseband unit BBU 2111. Each second access network device in the foregoing access network system includes one second baseband unit BBU. For example, the second access network device 201 includes a second baseband unit BBU 2011, the second access network device 202 includes a second baseband unit BBU 2021, and the second access network device 203 includes a second baseband unit BBU 2031. In addition, the second baseband unit BBU 2011, the second baseband unit BBU 2021, the second baseband unit BBU 2031, and the first baseband unit BBU 2111 are connected in series to form a closed loop. The second baseband unit BBU is configured to determine a bandwidth requirement of the second access network device. Optionally, the bandwidth requirement may be a bandwidth requirement for data transmission between the second access network device and another second access network device, or may be a bandwidth requirement of the second access network device in a backhaul network. This is not specifically limited herein. In addition, the first baseband unit BBU is configured to: obtain, from a plurality of second baseband units BBUs, bandwidth requirements of second access network devices corresponding to the second baseband units BBUs, and determine a bandwidth available to each second access network device.

For ease of understanding, FIG. 2A is still used as an example for description. The second baseband unit BBU 2011 is configured to determine a bandwidth requirement of the second access network device 201, the second baseband unit BBU 2021 is configured to determine a bandwidth requirement of the second access network device 202, and the second baseband unit BBU 2031 is configured to determine a bandwidth requirement of the second access network device 203. The first baseband unit BBU 2111 is configured to obtain the bandwidth requirement of the second access network device 201 from the second baseband unit BBU 2011. The first baseband unit BBU 2111 is configured to obtain the bandwidth requirement of the second access network device 202 from the second baseband unit BBU 2021. The first baseband unit BBU 2111 is configured to obtain the bandwidth requirement of the second access network device 203 from the second baseband unit BBU 2031. Then, the first baseband unit BBU 2111 determines a bandwidth available to each of the second access network devices 201, 202, and 203.

It should be understood that the access network device in this embodiment may be referred to as an access ring device. In this embodiment, a bandwidth management and control function is directly integrated into the first baseband unit BBU in the first access network device and the second baseband unit BBU in the second access network device, and ring networking is directly performed based on the first baseband unit BBU and the plurality of second baseband units BBUs. In this way, in addition to sensing a bandwidth requirement of the first access network device, the first baseband unit BBU may obtain the bandwidth requirement of the second access network device directly from the second baseband unit BBU, and allocate a bandwidth to each second access network device. Therefore, bandwidth allocation of access network devices can be optimized, efficiency of forwarding between the access network devices in the access ring can be improved, and network congestion can be alleviated.

In an optional implementation, the first baseband unit BBU is further configured to determine, based on the bandwidth available to each second access network device, a service data transmission path from at least one second access network device to the first access network device and service data between every two second access network devices on the path. Optionally, the first baseband unit BBU may further determine service data between a second access network device on the path and a first access network device adjacent to the second access network device.

FIG. 2A is still used as an example for description. The first baseband unit BBU 2111 determines, based on the bandwidths available to the second access network device 201, the second access network device 202, and the second access network device 203, a service data transmission path from the second access network device 201 to the first access network device 211. Specifically, when to determine a service data transmission path from the second access network device 202 to the first access network device 211, the first access network device 211 may determine that the path passes from the second access network device 202, the second access network device 201, and the first access network device 211 in sequence, or may determine that the path passes from the second access network device 202, the second access network device 203, and the first access network device 211 in sequence. This is not specifically limited herein. In this embodiment, an example in which the first access network device 211 may determine that the path passes from the second access network device 202, the second access network device 201, and the first access network device 211 in sequence is used for description. In this case, the service data transmission path passes from the second access network device 202, the second access network device 201, and the first access network device 211 in sequence. It may also be understood as that the service data transmission path passes from the second baseband unit BBU 2021, the second baseband unit BBU 2011, and the first baseband unit BBU 2111 in sequence. In this case, service data on the path includes service data between the second access network device 202 and the second access network device 201 and service data between the second access network device 201 and the first access network device 211. Optionally, it may also be understood as that the service data on the path includes service data between the second baseband unit BBU 2021 and the second baseband unit BBU 2011 and service data between the second baseband unit BBU 2011 and the first baseband unit BBU 2111.

Based on the foregoing optional implementation, the second baseband unit BBU is further configured to forward service data of the second access network device based on the service data transmission path. In this implementation, it may also be understood as that the second baseband unit BBU is further configured to forward the service data of the second access network device to another second baseband unit BBU based on the service data transmission path. It may be understood as that the second baseband unit BBU is further configured to forward the service data of the second access network device to the first baseband unit BBU based on the service data transmission path. Descriptions are provided still based on the foregoing example. In this case, the second baseband unit BBU 2021 may forward first service data to the second baseband unit BBU 2011, and the second baseband unit BBU 2011 may forward second service data to the first baseband unit BBU 2111. The first service data and the second service data may be the same or may be different. This is not specifically limited herein.

In this implementation, because a routing and forwarding function is further provided to the first baseband unit BBU, the first baseband unit BBU may determine, based on the bandwidth available to each second access network device, the service data transmission path from the at least one second access network device to the first access network device and the service data between every two second access network devices on the path. In this case, the second baseband unit BBU is further configured to forward the service data of the second access network device based on the service data transmission path. Because both the forwarding path and the forwarded service data are determined by the first baseband unit BBU based on the bandwidth requirement of each second access network device, route forwarding efficiency is improved, and network congestion is alleviated.

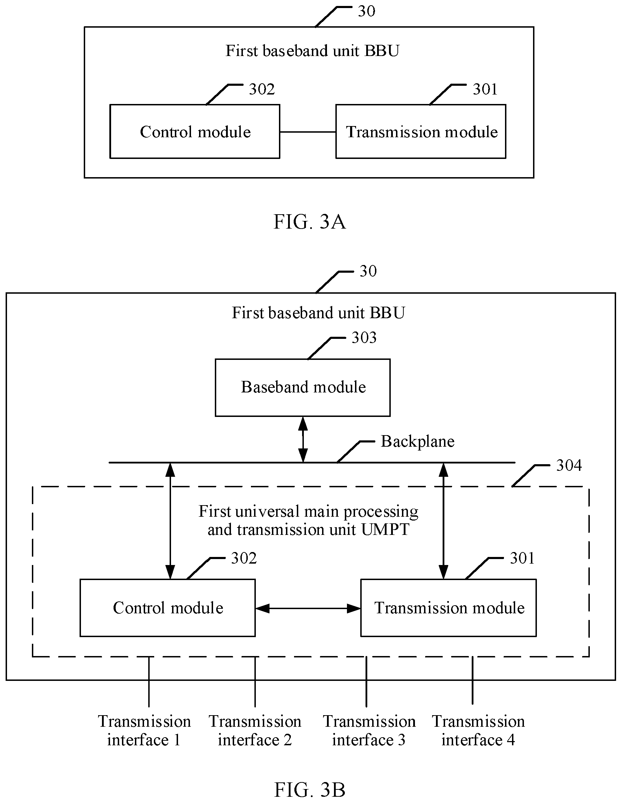

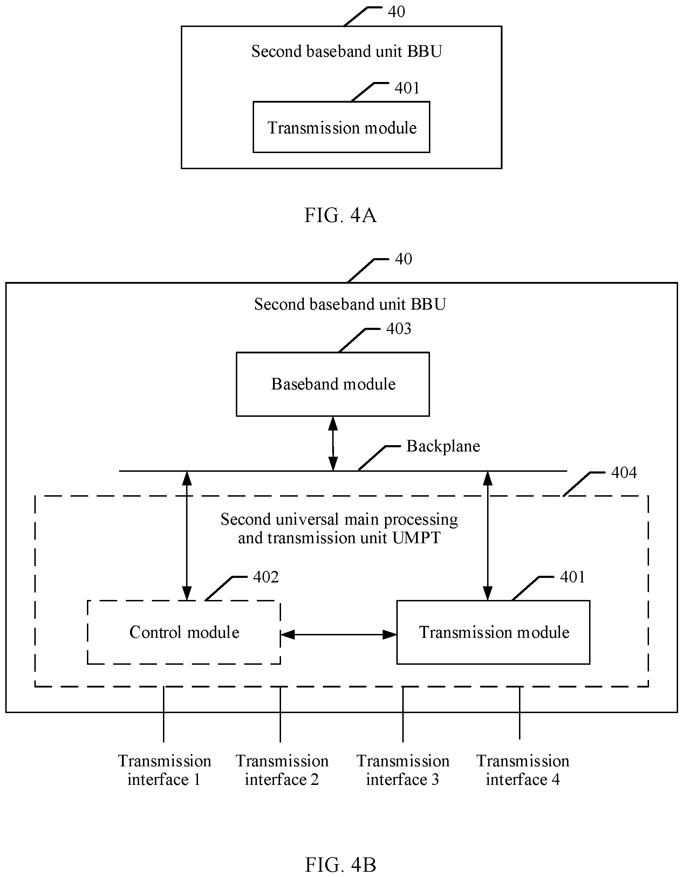

Based on the foregoing implementation, further, the first baseband unit BBU includes a first universal main processing and transmission unit UMPT, and the second baseband unit BBU includes a second universal main processing and transmission unit UMPT. Therefore, that at least one first baseband unit BBU and at least two second baseband units BBUs are connected in series to form a closed loop may also be understood as: At least one first universal main processing and transmission unit UMPT and at least two second universal main processing and transmission units UMPT are connected in series to form a closed loop. In this implementation, as further defined, a connection between baseband units BBUs is actually a connection between universal main processing and transmission units UMPTs in the baseband units BBUs. This implementation puts forward a specific connection mode, and improves feasibility of the solution. Specifically, a specific structure of the first baseband unit BBU is described in the following embodiments corresponding to FIG. 3A and FIG. 3B, and a specific structure of the second baseband unit BBU is described in the following embodiments corresponding to FIG. 4A and FIG. 4B. Details are not described herein.

Optionally, the first baseband unit BBU is connected to an aggregation-layer network device. In this implementation, the first baseband unit BBU is connected to the aggregation-layer network device, so that an access network system (that is, an access ring) including at least one first baseband unit BBU and at least two second baseband units may be connected to the aggregation-layer network device, that is, the access network system (that is, the access ring) may be connected to an aggregation layer (that is, an aggregation ring).

Optionally, in the access network system, at least one second access network device is connected to another second access network device. Further, at least one second baseband unit BBU is connected to another second baseband unit BBU. For example, the second baseband unit BBU 2011 in FIG. 2A is connected to the second baseband unit BBU 2031. As proposed in this implementation, the at least one second access network device in the access network system is connected to another second access network device. This helps increase a transmission link between the second access network devices, improve efficiency of forwarding between access network devices, and alleviate network congestion.

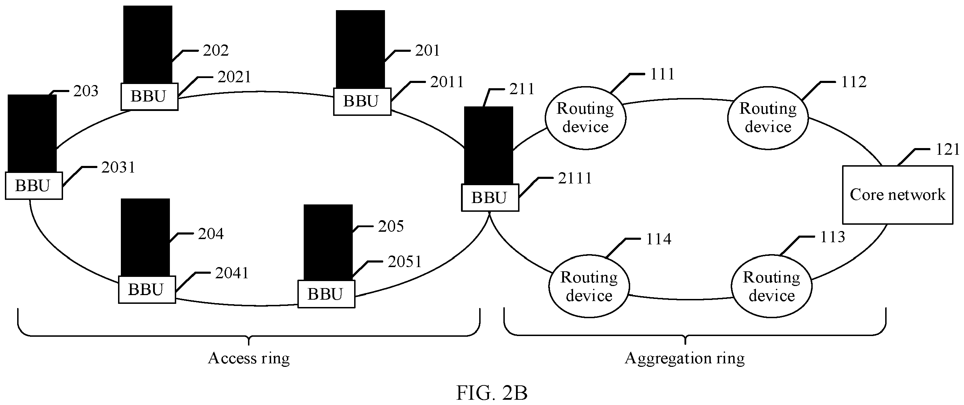

The foregoing describes a main architecture of the access network system in embodiments of this application, and describes the access network system with reference to an aggregation layer network. As shown in FIG. 2B, the network architecture includes an access ring (that is, the foregoing access network system) and an aggregation ring (that is, the foregoing aggregation layer network).

The access ring includes a first access network device, for example, a first access network device 211. The access ring further includes a plurality of second access network devices, for example, a second access network device 201, a second access network device 202, a second access network device 203, a second access network device 204, and a second access network device 205. The first access network device 211 includes a first baseband unit BBU 2111. The second access network device 201 includes a second baseband unit BBU 2011, the second access network device 202 includes a second baseband unit BBU 2021, the second access network device 203 includes a second baseband unit BBU 2031, and the second access network device 204 includes a second baseband unit BBU 2041, and the second access network device 205 includes a second baseband unit BBU 2051. The plurality of second baseband units BBUs are connected in series and form a closed loop with the first baseband unit BBU 2111.

In addition to the foregoing first access network device 211 (that is, the first baseband unit BBU 2111), the aggregation ring further includes a plurality of routing devices, for example, a routing device 111, a routing device 112, a routing device 113, and a routing device 114. In addition, the aggregation ring is further connected to a core network 121. In this embodiment, after the foregoing networking mode is adopted, in addition to sensing a bandwidth requirement of the first access network device, the first baseband unit BBU may obtain a bandwidth requirement of the second access network device directly from the second baseband unit BBU. Therefore, bandwidth allocation of access network devices can be optimized, efficiency of forwarding between the access network devices in the access ring can be improved, and network congestion can be alleviated.

The following describes the first baseband unit BBU and the second baseband unit BBU in the access network system. FIG. 3A shows a structure of a first baseband unit BBU 30 according to an embodiment of this application. The first baseband unit BBU 30 includes a transmission module 301 and a control module 302, where the control module 302 is connected to the transmission module 301. The control module 302 is configured to: obtain, from a plurality of second baseband units BBUs, bandwidth requirements of second access network devices corresponding to the second baseband units BBUs, and determine a bandwidth available to each second access network device. The control module 302 is further configured to determine, based on the bandwidth available to each second access network device, a service data transmission path from at least one second access network device to the first access network device and service data between every two second access network devices on the path. The transmission module 301 is configured to forward, based on the service data transmission path, service data to the second baseband unit BBU through a transmission interface.

Optionally, the transmission module is further configured to send the service data to an aggregation-layer network device.

In this embodiment, in addition to sensing a bandwidth requirement of the first access network device, the control module 302 in the first baseband unit BBU 30 may obtain the bandwidth requirement of the second access network device directly from the second baseband unit BBU, and allocate a bandwidth to each second access network device. Therefore, bandwidth allocation of access network devices can be optimized, efficiency of forwarding between the access network devices in an access ring can be improved, and network congestion can be alleviated. In addition, because a routing and forwarding function is further provided to the first baseband unit BBU, the first baseband unit BBU may determine, based on the bandwidth available to each second access network device, the service data transmission path from the at least one second access network device to the first access network device and the service data between every two second access network devices on the path. In this case, the second baseband unit BBU is further configured to forward the service data of the second access network device based on the service data transmission path. Because both the forwarding path and the forwarded service data are determined by the first baseband unit BBU based on the bandwidth requirement of each second access network device, route forwarding efficiency is improved, and network congestion is alleviated.

Optionally, the first baseband unit BBU 30 sends a forwarding instruction to the second baseband unit BBU, where the forwarding instruction includes a service data transmission path from the second baseband unit BBU to the first baseband unit BBU 30 and service data between every two second access network devices on the path. As proposed in this implementation, the first baseband unit BBU 30 may send the forwarding instruction to the second baseband unit BBU, to indicate the service data transmission path from the second baseband unit BBU to the first baseband unit BBU 30 and the service data between every two second access network devices on the path. This helps the second baseband unit BBU forward the service data according to the forwarding instruction.

FIG. 3B shows another structure of the first baseband unit BBU 30 according to an embodiment of this application. The first baseband unit BBU 30 includes a transmission module 301 and a control module 302, where the control module 302 is connected to the transmission module 301. Specifically, for functions of the transmission module 301 and the control module 302, refer to related descriptions in the embodiment corresponding to FIG. 3A. Details are not described herein again.

Optionally, the transmission module 301 may be referred to as a transmission subsystem, and the control module 302 may be referred to as a control subsystem. Specific names of the transmission module 301 and the control module 302 are not limited in this embodiment and subsequent embodiments of this application. In this embodiment and subsequent embodiments, the transmission module and the control module are only used as examples for description. Optionally, the first baseband unit BBU 30 includes a first universal main processing and transmission unit UMPT 304, and the transmission module 301 and the control module 302 are located in the first universal main processing and transmission unit UMPT 304. The transmission module 301 and the control module 302 are both connected to a backplane outside the first universal main processing and transmission unit UMPT 304, and the backplane is connected to a power supply (not shown).

Optionally, the first universal main processing and transmission unit UMPT 304 includes at least three transmission interfaces, where the transmission interfaces are configured to connect to other second baseband units BBUs, or configured to connect to other first baseband units BBUs. This is not specifically limited herein.

In this implementation, it may be understood that the first universal main processing and transmission unit UMPT 304 is configured with three transmission interfaces, the first universal main processing and transmission unit UMPT 304 is configured with four transmission interfaces, the first universal main processing and transmission unit UMPT 304 is configured with five transmission interfaces, or the first universal main processing and transmission unit UMPT 304 is configured with six transmission interfaces.

Optionally, the first universal main processing and transmission unit UMPT 304 includes at least four transmission interfaces.

It should be understood that FIG. 3B shows only four transmission interfaces: a transmission interface 1, a transmission interface 2, a transmission interface 3, and a transmission interface 4. In actual application, a quantity of transmission interfaces may be increased as required. This is not specifically limited herein.

In this implementation, a quantity of transmission interfaces of the first universal main processing and transmission unit UMPT is specified. When the quantity of transmission interfaces of the first universal main processing and transmission unit UMPT is 3, two of the three transmission interfaces are separately configured to connect different second baseband units BBUs, and the third transmission interface is used as a backup. Alternatively, two of the three transmission interfaces are separately configured to connect a second baseband unit BBU and another first baseband unit BBU, and the third transmission interface is used as a backup. This is not specifically limited herein. In this implementation, a plurality of optional solutions are provided for the foregoing transmission interfaces, which helps make connections between baseband units BBUs in the access network system (that is, the access ring) reliable. Optionally, the first baseband unit BBU 30 further includes a baseband module 303. The baseband module 303 is configured to generate a digital baseband signal, and transmit the baseband signal to one or more remote radio units (remote radio units, RRUs) connected to the first baseband unit BBU 30. The remote radio unit RRU converts the digital baseband signal into a high frequency (radio frequency) signal, and sends the high frequency (radio frequency) signal to an antenna for radiation. It should be understood that both the first baseband unit BBU 30 and the remote radio unit RRU are located in the first access network device, optical fiber transmission may be used between the first baseband unit BBU 30 and the remote radio unit RRU, and the remote radio unit RRU and the antenna may be connected by using apparatuses such as a coaxial cable and a power splitter (coupler). It should be understood that the baseband module 303 may also be referred to as a baseband subsystem.

FIG. 4A shows a structure of a second baseband unit BBU 40 according to an embodiment of this application. The second baseband unit BBU 40 includes a transmission module 401. The transmission module 401 is configured to receive, through a first transmission interface (not shown), service data forwarded by a first baseband unit BBU. The transmission module 401 is further configured to receive a forwarding instruction from a first access network device, and forward the service data to another second baseband unit BBU through a second transmission interface (not shown), where the forwarding instruction includes a service data transmission path from the second baseband unit BBU to the first baseband unit BBU and service data between every two second access network devices on the path. In this embodiment, the second baseband unit BBU 40 may receive the forwarding instruction from the first access network device, and forward the service data to another second baseband unit BBU through the second transmission interface. This helps improve efficiency of forwarding between access network devices in the access ring and alleviate network congestion.

FIG. 4B shows another structure of the second baseband unit BBU 40 according to an embodiment of this application. In addition to the transmission module 401, the second baseband unit BBU 40 further includes a control module 402. The control module 402 is configured to determine a bandwidth requirement of a second access network device corresponding to the second baseband unit BBU 40. The transmission module 401 is further configured to send the bandwidth requirement to the first baseband unit.

In this implementation, the second baseband unit BBU 40 may also have a bandwidth management and control function to optimize bandwidth allocation between access network devices, improve efficiency of forwarding between the access network devices in the access ring, and alleviate network congestion. In addition, when a fault occurs in the first baseband unit BBU currently, the second baseband unit BBU 40 may enable the bandwidth management and control function and a routing and forwarding function, to ensure that forwarding efficiency of the access network system (that is, an access ring) is not affected.

Optionally, the transmission module 401 may be referred to as a transmission subsystem, and the control module 402 may be referred to as a control subsystem. Specific names of the transmission module 401 and the control module 402 are not limited in this embodiment and subsequent embodiments of this application. In this embodiment and subsequent embodiments, the transmission module and the control module are only used as examples for description. Optionally, the second baseband unit BBU 40 includes a second universal main processing and transmission unit UMPT 404, and the transmission module 401 and the control module 402 are located in the second universal main processing and transmission unit UMPT 404. The transmission module 401 and the control module 402 are both connected to a backplane outside the second universal main processing and transmission unit UMPT 404, and the backplane is connected to a power supply (not shown).

Optionally, the second universal main processing and transmission unit UMPT 404 includes at least three transmission interfaces, where the transmission interfaces are configured to connect to other second baseband units BBUs, or configured to connect to other first baseband units BBUs. This is not specifically limited herein.

In this implementation, it may be understood that the second universal main processing and transmission unit UMPT 404 is configured with three transmission interfaces, the second universal main processing and transmission unit UMPT 404 is configured with four transmission interfaces, the second universal main processing and transmission unit UMPT 404 is configured with five transmission interfaces, or the second universal main processing and transmission unit UMPT 404 is configured with six transmission interfaces.

Optionally, the second universal main processing and transmission unit UMPT 404 includes at least four transmission interfaces.

It should be understood that FIG. 4B shows only four transmission interfaces: a transmission interface 1, a transmission interface 2, a transmission interface 3, and a transmission interface 4. In actual application, a quantity of transmission interfaces may be increased as required. This is not specifically limited herein.

In this implementation, a quantity of transmission interfaces of the second universal main processing and transmission unit UMPT is specified. When the quantity of transmission interfaces of the second universal main processing and transmission unit UMPT is 3, two of the three transmission interfaces are separately configured to connect different second baseband units BBUs, and the third transmission interface is used as a backup. Alternatively, two of the three transmission interfaces are separately configured to connect a second baseband unit BBU and another first baseband unit BBU, and the third transmission interface is used as a backup. This is not specifically limited herein. In this implementation, a plurality of optional solutions are provided for the foregoing transmission interfaces, which helps make connections between baseband units BBUs in the access network system (that is, the access ring) reliable. Optionally, the second baseband unit BBU 40 further includes a baseband module 403. The baseband module 403 is configured to generate a digital baseband signal, and transmit the baseband signal to one or more remote radio units (remote radio units, RRUs) connected to the second baseband unit BBU 40. The remote radio unit RRU converts the digital baseband signal into a high frequency (radio frequency) signal, and sends the high frequency (radio frequency) signal to an antenna for radiation. It should be understood that both the second baseband unit BBU 40 and the remote radio unit RRU are located in the second access network device, optical fiber transmission may be used between the second baseband unit BBU 40 and the remote radio unit RRU, and the remote radio unit RRU and the antenna may be connected by using apparatuses such as a coaxial cable and a power splitter (coupler). It should be understood that the baseband module 403 may also be referred to as a baseband subsystem.

It should be understood that, the another second baseband unit BBU mentioned in this embodiment and subsequent embodiments may be based on the structure of the second baseband unit BBU 40 corresponding to FIG. 4A or FIG. 4B.

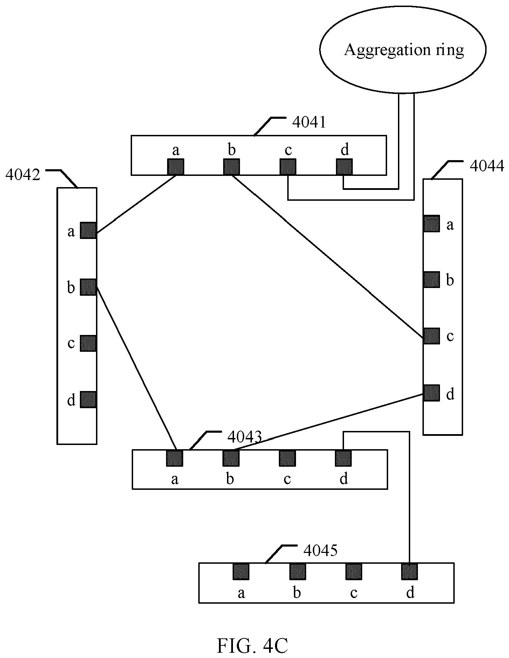

For ease of understanding, the following describes the access network system by using an example in which the first universal main processing and transmission unit UMPT includes four transmission interfaces and the second universal main processing and transmission unit UMPT includes four transmission interfaces. FIG. 4C is a simplified schematic connection diagram of an access network system. Five universal main processing and transmission units UMPTs are shown, and a baseband unit BBU and an access network device are omitted. Each universal main processing and transmission unit UMPT includes four transmission interfaces a, b, c, and d. In addition, a first universal main processing and transmission unit UMPT 4041 is a universal main processing and transmission unit UMPT in a first baseband unit BBU. A second universal main processing and transmission unit UMPT 4042, a second universal main processing and transmission unit UMPT 4043, and a second universal main processing and transmission unit UMPT 4044 are universal main processing and transmission units UMPTs in different second baseband units BBUs. Specifically, a transmission interface a of the first universal main processing and transmission unit UMPT 4041 is connected to a transmission interface a of the second universal main processing and transmission unit UMPT 4042, a transmission interface b of the second universal main processing and transmission unit UMPT 4042 is connected to a transmission interface a of the second universal main processing and transmission unit UMPT 4043, a transmission interface b of the second universal main processing and transmission unit UMPT 4043 is connected to a transmission interface d of the second universal main processing and transmission unit UMPT 4044, and a transmission interface c of the second universal main processing and transmission unit UMPT 4044 is connected to a transmission interface b of the first universal main processing and transmission unit UMPT 4041. In this case, the four universal main processing and transmission units UMPTs form a closed loop. Therefore, four baseband units BBUs separately corresponding to the four universal main processing and transmission units UMPTs form a closed loop, and access network devices separately corresponding to the four baseband units BBUs form a closed loop.

In addition, a transmission interface c of the first universal main processing and transmission unit UMPT 4041 is connected to an aggregation ring. Optionally, a transmission interface d of the first universal main processing and transmission unit UMPT 4041 is also connected to the aggregation ring.

In addition, each of the second universal main processing and transmission units UMPTs may further be connected to a 3^{rd} second universal main processing and transmission unit UMPT to form a branch chain. For example, the transmission interface a of the second universal main processing and transmission unit UMPT 4043 is connected to the transmission interface b of the second universal main processing and transmission unit UMPT 4042, the transmission interface b of the second universal main processing and transmission unit UMPT 4043 is connected to the transmission interface d of the second universal main processing and transmission unit UMPT 4044, and a transmission interface d of the second universal main processing and transmission unit UMPT 4043 is connected to a transmission interface d of a second universal main processing and transmission unit UMPT 4045.

It should be further understood that an unused transmission interface of each of the universal main processing and transmission units UMPTs may be used as a backup transmission interface, so that the universal main processing and transmission unit UMPT can switch a transmission interface when another transmission interface fails, to ensure connection reliability of each universal main processing and transmission unit UMPT.

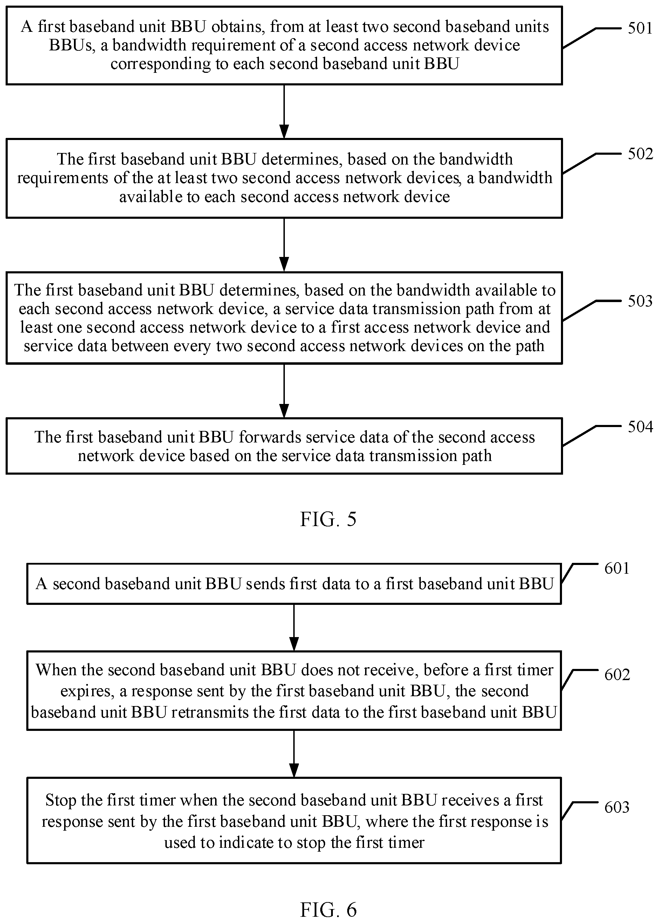

The foregoing separately describes the access network system, the first baseband unit BBU, and the second baseband unit BBU provided in embodiments of this application. The following describes a method for transmission between the first baseband unit BBU and the second baseband unit BBU. As shown in FIG. 5, steps performed by the first baseband unit BBU and the second baseband unit BBU include:
501. The first baseband unit BBU obtains, from at least two second baseband units BBUs, a bandwidth requirement of a second access network device corresponding to each second baseband unit BBU.

At least one first baseband unit BBU and the at least two second baseband units BBUs are connected in series to form a closed loop. For details, refer to the networking modes shown in FIG. 2A and FIG. 2B. Details are not described herein again.

The first baseband unit BBU is included in a first access network device, and the second baseband unit BBU is included in the second access network device. The bandwidth requirement may be a bandwidth requirement for data transmission between the second access network device and another second access network device, or may be a bandwidth requirement of the second access network device in a backhaul network. This is not specifically limited herein.

502. The first baseband unit BBU determines, based on the bandwidth requirements of the at least two second access network devices, a bandwidth available to each second access network device.

In this embodiment, the first baseband unit BBU may determine, based on the bandwidth requirement of each second access network device, the bandwidth available to each second access network device, and the bandwidth available to each second access network device meets the bandwidth requirement of each second access network device as much as possible. When there is no sufficient bandwidth, the first baseband unit BBU allocates a bandwidth to each second access network device based on a preset weight, to ensure that a service of each second access network device is smooth.

503. The first baseband unit BBU determines, based on the bandwidth available to each second access network device, a service data transmission path from at least one second access network device to the first access network device and service data between every two second access network devices on the path.

Optionally, the first baseband unit BBU may determine the path based on a default route that is internally managed and maintained.

Optionally, the first baseband unit BBU may determine the path based on the bandwidth available to each second access network device and link status information of a current access ring. The link status information of the current access ring includes:
information such as path information of an established L2 tunnel, network-level path optimization information, a topology, a delay, and a quantity of hops.

504. The first baseband unit BBU forwards service data of the second access network device based on the service data transmission path.

In this embodiment of this application, a bandwidth management and control function is directly integrated into the first baseband unit BBU in the first access network device and the second baseband unit BBU in the second access network device, and ring networking is directly performed based on the first baseband unit BBU and the plurality of second baseband units BBUs. In this way, in addition to sensing a bandwidth requirement of the first access network device, the first baseband unit BBU may obtain the bandwidth requirement of the second access network device directly from the second baseband unit BBU, and allocate a bandwidth to each second access network device. Therefore, bandwidth allocation of access network devices can be optimized, efficiency of forwarding between the access network devices in the access ring can be improved, and network congestion can be alleviated.

Based on the foregoing networking mode, an embodiment provides a transmission method based on the foregoing access network system and the transmission control protocol (transmission control protocol, TCP). The transmission control protocol is a connection-oriented, reliable, and byte stream-based transport layer communication protocol. The purpose of the transmission control protocol is to accommodate layered protocol hierarchies that support multinetwork applications, and reliable communication services are provided, by relying on the transmission control protocol, between paired processes in host computers connected to different but interconnected computer communication networks. Specifically, as shown in FIG. 6, in the transmission method, steps performed by the second baseband unit BBU include:
601. The second baseband unit BBU sends first data to the first baseband unit BBU.

In this embodiment, the second baseband unit BBU may send the first data to the first baseband unit BBU according to a forwarding instruction of the first baseband unit BBU, where the forwarding instruction includes a service data transmission path from the second baseband unit BBU to the first baseband unit BBU and service data between every two second access network devices on the path.

In this embodiment, the first data may be service data of a second access network device corresponding to the second baseband unit BBU, or may be service data of a second access network device corresponding to one or more other second baseband units BBUs connected to or indirectly connected to the second baseband unit BBU. This is not specifically limited herein.

After the second baseband unit BBU sends the first data to the first baseband unit BBU, the second baseband unit BBU waits for a response from the first baseband unit BBU, to ensure that the second baseband unit BBU has received the first data successfully. Specifically, after the second baseband unit BBU sends the first data to the first baseband unit BBU, the second baseband unit BBU starts a first timer, where the first timer is configured to record duration in which the second baseband unit BBU waits for a response sent by the first baseband unit BBU. When the second baseband unit BBU receives, before the first timer expires, a response sent by the first baseband unit BBU, the second baseband unit BBU may determine that the first baseband unit BBU has received the first data successfully. When the second baseband unit BBU does not receive, before the first timer expires, a response sent by the first baseband unit BBU, the second baseband unit BBU performs step 602.

602. When the second baseband unit BBU does not receive, before the first timer expires, a response sent by the first baseband unit BBU, the second baseband unit BBU retransmits the first data to the first baseband unit BBU.

In this embodiment, when the second baseband unit BBU does not receive, before the first timer expires, a response sent by the first baseband unit BBU, the second baseband unit BBU may retransmit the first data to the first baseband unit BBU. Duration of the first timer is determined by service data transmitted between the first baseband unit BBU and the second baseband unit BBU, and the service data includes the first data. Specifically, the duration of the first timer is determined according to the forwarding instruction from the first baseband unit BBU, and the forwarding instruction includes the service data transmission path from the second baseband unit BBU to the first baseband unit BBU and the service data between every two second access network devices on the path.

That is, before the second baseband unit BBU sends the first data to the first baseband unit BBU, the second baseband unit BBU receives the forwarding instruction from the first baseband unit BBU, and determines the duration of the first timer according to the forwarding instruction. In this implementation, because the duration of the first timer is determined based on an amount of service data between the first baseband unit BBU and the second baseband unit BBU, the first timer may be adjusted based on an actual service data transmission status. This can avoid a case in which forwarding efficiency is reduced as a data transmission delay is increased with excessively long duration of the first timer determined by the second baseband unit BBU. Therefore, this helps improve efficiency of forwarding between baseband units BBUs, that is, improve efficiency of forwarding between access network devices in an access ring, and alleviate network congestion.

Optionally, the second baseband unit BBU restarts the first timer when the second baseband unit BBU retransmits the first data to the first baseband unit BBU.

603. Stop the first timer when the second baseband unit BBU receives a first response sent by the first baseband unit BBU, where the first response is used to indicate to stop the first timer.

In this embodiment, step 603 is an optional step.

In this embodiment, when the second baseband unit BBU receives the first response sent by the first baseband unit BBU, the second baseband unit BBU may determine, based on the first response, that the first baseband unit BBU has sent the first data to an aggregation ring. Therefore, the second baseband unit BBU stops the first timer based on the first response.

In this embodiment, a ring networking mode is used, and a bandwidth management and control function and a routing and forwarding function are directly integrated into baseband units BBUs in access network devices, so that data can be forwarded between the baseband units BBUs. This helps improve efficiency of forwarding between access network devices in the access ring and alleviate network congestion.

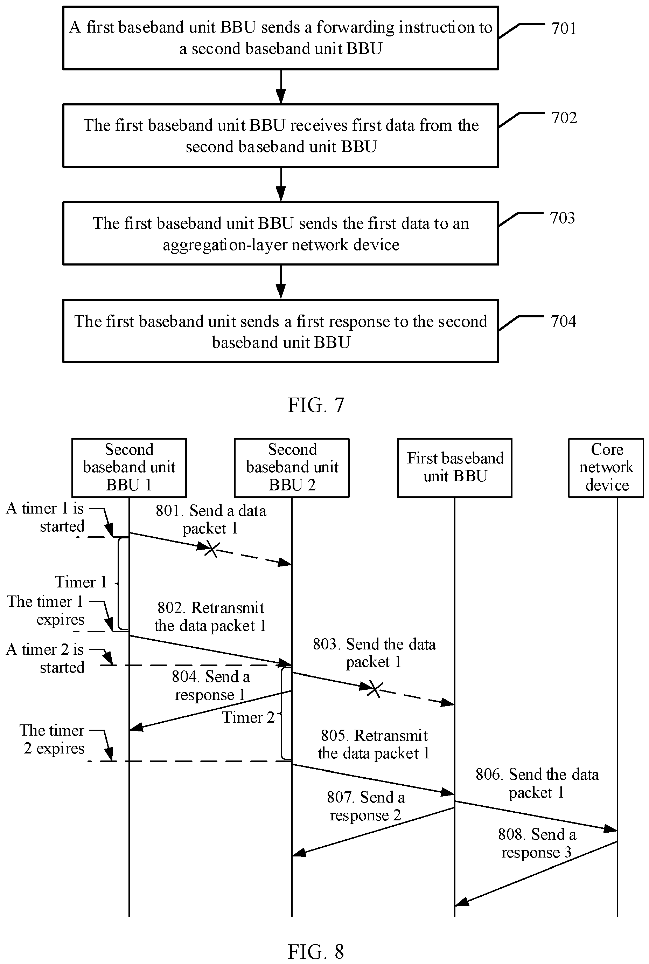

As shown in FIG. 7, in the transmission method, steps performed by the first baseband unit BBU include:
701. The first baseband unit BBU sends a forwarding instruction to the second baseband unit BBU.

In this embodiment, step 701 is an optional step.

The forwarding instruction includes a service data transmission path from the second baseband unit BBU to the first baseband unit BBU and service data between every two second access network devices on the path, so that the second baseband unit BBU determines duration of a first timer according to the forwarding instruction, where the duration of the first timer is determined based on service data transmitted between the first baseband unit BBU and the second baseband unit BBU, and the service data includes first data.

702. The first baseband unit BBU receives the first data from the second baseband unit BBU.

In this embodiment, the first data may be data sent by the second baseband unit BBU for the first time, or may be data retransmitted by the second baseband unit BBU. This is not specifically limited herein. In addition, the first data may be service data of a second access network device corresponding to the second baseband unit BBU, or may be service data of a second access network device corresponding to one or more other second baseband units BBUs connected to or indirectly connected to the second baseband unit BBU. This is not specifically limited herein.

703. The first baseband unit BBU sends the first data to an aggregation-layer network device.

In this embodiment, after receiving the first data, the first baseband unit BBU may directly send the first data to the aggregation-layer network device, with no need to send a first response to the second baseband unit BBU and wait for a second response that is based on the first response. This helps reduce a network delay, improve forwarding efficiency, and alleviate network congestion.

704. The first baseband unit sends the first response to the second baseband unit BBU.

The first response is used to indicate that the first baseband unit BBU has sent the first data to the aggregation-layer network device.

In this embodiment, a ring networking mode is used, and a bandwidth management and control function and a routing and forwarding function are directly integrated into baseband units BBUs in access network devices, so that data can be forwarded between the baseband units BBUs. This helps improve efficiency of forwarding between access network devices in an access ring and alleviate network congestion.

For ease of understanding, the foregoing transmission method is described by using a specific example. As shown in FIG. 8, the example includes a second baseband unit BBU 1, a second baseband unit BBU 2, a first baseband unit BBU, and a core network device. It should be understood that, in actual application, because the access network system may include a plurality of first baseband units BBUs and a plurality of second baseband units BBUs, the transmission method is also applicable to a plurality of first baseband units BBUs and a plurality of second baseband units BBUs. This embodiment enumerates two second baseband units BBUs and one first baseband unit BBU merely for ease of description. Specifically, the transmission method includes the following steps.

801. The second baseband unit BBU 1 sends a data packet 1 to the second baseband unit BBU 2.

In this embodiment, the first baseband unit BBU 1 is connected to the second baseband unit BBU 2, and the first baseband unit BBU 1 may send the data packet 1 to the second baseband unit BBU 2. The data packet 1 may be the first data described in the foregoing embodiments. The data packet 1 may be service data of a second access network device corresponding to the second baseband unit BBU 1, or may be service data of a second access network device corresponding to one or more other second baseband units BBUs connected to or indirectly connected to the second baseband unit BBU 1. This is not specifically limited herein.

When the second baseband unit BBU 1 sends the data packet 1 to the second baseband unit BBU 2, the second baseband unit BBU 1 starts a timer 1 to record time for the second baseband unit BBU 1 to wait for a response. The timer 1 may be the first timer in the foregoing embodiments, and duration of the timer 1 is determined according to a forwarding instruction from the first baseband unit BBU, where the forwarding instruction includes a service data transmission path from the second baseband unit BBU 1 to the first baseband unit BBU and service data between every two second access network devices on the path.

When the timer 1 expires, if the second baseband unit BBU 1 does not receive a response from the second baseband unit BBU 2, the second baseband unit BBU 1 performs step 802.

802. The second baseband unit BBU 1 retransmits the data packet 1 to the second baseband unit BBU 2.

In this embodiment, when the timer 1 expires, and the second baseband unit BBU 1 does not receive a response from the second baseband unit BBU 2, the second baseband unit BBU 1 retransmits the data packet 1 to the second baseband unit BBU 2.

In this case, the second baseband unit BBU 1 restarts the timer 1.

803. The second baseband unit BBU 2 sends the data packet 1 to the first baseband unit BBU.

In this embodiment, when the second baseband unit BBU 2 receives the data packet 1 from the second baseband unit BBU 1, the second baseband unit BBU 2 sends the data packet 1 to the first baseband unit BBU.

When the second baseband unit BBU 2 sends the data packet 1 to the first baseband unit BBU, the second baseband unit BBU 2 starts a timer 2 to record time for the second baseband unit BBU 2 to wait for a response. The timer 2 may be the first timer in the foregoing embodiments, and duration of the timer 2 is determined according to a forwarding instruction from the first baseband unit BBU, where the forwarding instruction includes a service data transmission path from the second baseband unit BBU 2 to the first baseband unit BBU and service data between every two second access network devices on the path. It should be understood that the duration of the timer 2 may be or may not be equal to the duration of the timer 1.

804. The second baseband unit BBU 2 sends a response 1 to the second baseband unit BBU 1.

In this embodiment, a time sequence of step 803 and step 804 is not limited. To be specific, the second baseband unit BBU 2 may first perform step 803 and then perform step 804, the second baseband unit BBU 2 may first perform step 804 and then perform step 803, or the second baseband unit BBU 2 may simultaneously perform step 803 and step 804. This is not specifically limited herein.

In this embodiment, because the second baseband unit BBU 2 sends the response 1 to the second baseband unit BBU 1, and the second baseband unit BBU 1 receives the response 1 within the duration of the timer 1, the second baseband unit BBU 1 may stop the timer 1 when receiving the response 1.

805. The second baseband unit BBU 2 retransmits the data packet 1 to the first baseband unit BBU.

In this embodiment, when the timer 2 expires, and the second baseband unit BBU 2 does not receive a response from the first baseband unit BBU, the second baseband unit BBU 2 retransmits the data packet 1 to the first baseband unit BBU.

In this case, the second baseband unit BBU 2 restarts the timer 2.

806. The first baseband unit BBU sends the data packet 1 to the core network device.

In this embodiment, when the first baseband unit BBU receives the data packet 1 from the second baseband unit BBU 2, the first baseband unit BBU sends the data packet 1 to the core network device.

When the first baseband unit BBU sends the data packet 1 to the core network device, the first baseband unit BBU starts a timer 3 to record time for the first baseband unit BBU to wait for a response. Duration of the timer 3 is determined based on an amount of service data transmitted from the first baseband unit BBU to the core network device. It should be understood that the duration of the timer 3 may be or may not be equal to the duration of the timer 1, and the duration of the timer 3 may be or may not be equal to the duration of the timer 2. This is not specifically limited herein.

807. The first baseband unit BBU sends a response 2 to the second baseband unit BBU 2.

In this embodiment, a time sequence of step 806 and step 807 is not limited. To be specific, the first baseband unit BBU may first perform step 806 and then perform step 807, the first baseband unit BBU may first perform step 807 and then perform step 806, or the first baseband unit BBU may simultaneously perform step 806 and step 807. This is not specifically limited herein.

In this embodiment, because the first baseband unit BBU sends the response 2 to the second baseband unit BBU 2, and the second baseband unit BBU 2 receives the response 2 within the duration of the timer 2, the second baseband unit BBU 2 may stop the timer 2 when receiving the response 2.

808. The core network device sends a response 3 to the first baseband unit BBU.

In this embodiment, because the core network device receives the data packet 1, the core network device may send the response 3 to the first baseband unit BBU.

In this embodiment, because the core network device sends the response 3 to the first baseband unit BBU, and the core network device receives the response 3 within the duration of the timer 3, the first baseband unit BBU may stop the timer 3 when receiving the response 3.

In this embodiment, the timer of each baseband unit BBU is determined based on an amount of service data transmitted between the baseband units BBUs. For example, the duration of the timer 1 is determined based on the service data transmission path from the second baseband unit BBU 1 to the first baseband unit BBU and the service data between every two second access network devices on the path. The duration of the timer 2 is determined based on the service data transmission path from the second baseband unit BBU 2 to the first baseband unit BBU and the service data between every two second access network devices on the path. The duration of the timer 3 is determined based on the amount of service data transmitted from the first baseband unit BBU to the core network device. Therefore, the timer may be adjusted based on an actual service data transmission status. This can avoid a case in which forwarding efficiency is reduced as a data transmission delay is increased with excessively long duration of the timer determined by the baseband unit BBU. Therefore, this helps improve efficiency of forwarding between baseband units BBUs, that is, improve efficiency of forwarding between access network devices in an access ring, and alleviate network congestion.

The foregoing describes the transmission method provided in embodiments of this application. The following describes a specific structure of an access network device involved in the transmission method.

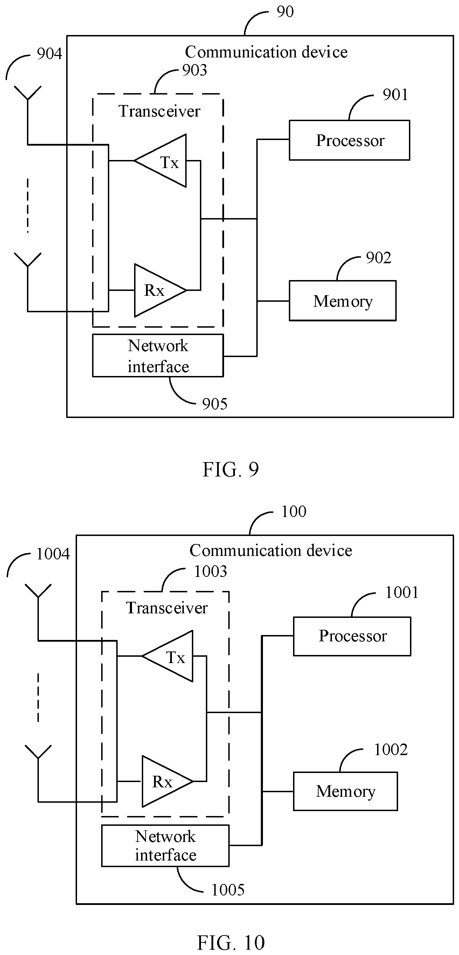

FIG. 9 is a schematic diagram of a structure of a communication device 90 according to an embodiment. The first access network device in the method embodiments corresponding to FIG. 5, FIG. 6, FIG. 7, and FIG. 8 may be based on the structure of the communication device 90 shown in FIG. 9 in this embodiment.

The communication device 90 includes at least one processor 901, at least one memory 902, at least one transceiver 903, at least one network interface 905, and one or more antennas 904. The processor 901, the memory 902, the transceiver 903, and the network interface 905 are connected by using a connection apparatus, and the antenna 904 is connected to the transceiver 903. The connection apparatus may include various types of interfaces, transmission cables, buses, or the like. This is not limited in this embodiment.

The processor 901 may be a baseband processor, or may be a central processing unit (central processing unit, CPU). The baseband processor and the CPU may be integrated together or separated from each other. When the processor 901 is a baseband processor, the baseband processor may be a first baseband unit BBU. The processor 901 may be configured to implement various functions for the communication device 90. For example, the processor is configured to process a communication protocol and communication data; control the entire communication device 90, execute a software program, and process data of the software program; or assist in completing a computing processing task, for example, processing graphics and images or audio. Alternatively, the processor 901 is configured to implement one or more of the foregoing functions.

In this embodiment, the memory 902 is mainly configured to store the software program and the data. The memory 902 may exist independently, and is connected to the processor 901. Optionally, the memory 902 may be integrated with the processor 901, for example, integrated into one or more chips. The memory 902 can store program code for executing the technical solutions in embodiments of this application, and the processor 901 controls the execution. Various types of executed computer program code may also be considered as drivers of the processor 901. It should be understood that FIG. 9 in this embodiment shows only one memory and one processor. However, in actual application, the communication device 90 may have a plurality of processors or a plurality of memories. This is not specifically limited herein. In addition, the memory 902 may also be referred to as a storage medium, a storage device, or the like. The memory 902 may be a storage element located in a same chip as the processor, namely, an on-chip storage element, or may be an independent storage element. This is not limited in embodiments of this application. In this embodiment, the transceiver 903 may be configured to support receiving or sending of a radio frequency signal between the communication device 90 and another network device (for example, a second access network device or a second baseband unit BBU in the second access network device). The transceiver 903 may be connected to the antenna 904. The transceiver 903 includes a transmitter Tx and a receiver Rx. Specifically, the one or more antennas 904 may receive a radio frequency signal. The receiver Rx of the transceiver 903 is configured to: receive the radio frequency signal from the antenna 904, convert the radio frequency signal into a digital baseband signal or a digital intermediate frequency signal, and provide the digital baseband signal or the digital intermediate frequency signal for the processor 901, so that the processor 901 further processes (for example, demodulates or decodes) the digital baseband signal or the digital intermediate frequency signal. In addition, the transmitter Tx of the transceiver 903 is further configured to receive a modulated digital baseband signal or digital intermediate frequency signal from the processor 901, convert the modulated digital baseband signal or digital intermediate frequency signal into a radio frequency signal, and send the radio frequency signal through the one or more antennas 904. Specifically, the receiver Rx may selectively perform one-level or multi-level down frequency mixing processing and analog-to-digital conversion processing on the radio frequency signal to obtain a digital baseband signal or a digital intermediate frequency signal, and a sequence of the down frequency mixing and the analog-to-digital conversion processing is adjustable. The transmitter Tx may selectively perform one or more levels of up-mixing processing and digital-to-analog conversion processing on the modulated digital baseband signal or the digital intermediate frequency signal to obtain a radio frequency signal, and a sequence of the up-mixing processing and the digital-to-analog conversion processing is adjustable. The digital baseband signal and the digital intermediate frequency signal may be collectively referred to as a digital signal.

It should be understood that the transceiver 903 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. To be specific, the transceiver unit includes the receiving unit and the sending unit. The receiving unit may also be referred to as a receiver machine, a receiver, an input port, a receiver circuit, or the like, and the sending unit may also be referred to as a transmitter machine, a transmitter, an output port, a transmitter circuit, or the like.

In addition, the network interface 905 is configured to connect the communication device 90 to another communication device through a communication link. Specifically, the network interface 905 may include a network interface such as an S1 interface between the communication device 90 and a core network element. The network interface 905 may also include a network interface such as an X2 or Xn interface between the communication device 90 and another network device (for example, another access network device or another core network element).

FIG. 10 is a schematic diagram of a structure of a communication device 100 according to an embodiment. The second access network device in the method embodiments corresponding to FIG. 5, FIG. 6, FIG. 7, and FIG. 8 may be based on the structure of the communication device 100 shown in FIG. 10 in this embodiment.

The communication device 100 includes at least one processor 1001, at least one memory 1002, at least one transceiver 1003, at least one network interface 1005, and one or more antennas 1004. The processor 1001, the memory 1002, the transceiver 1003, and the network interface 1005 are connected by using a connection apparatus, and the antenna 1004 is connected to the transceiver 1003. The connection apparatus may include various types of interfaces, transmission cables, buses, or the like. This is not limited in this embodiment.

The processor 1001 may be a baseband processor, or may be a central processing unit (central processing unit, CPU). The baseband processor and the CPU may be integrated together or separated from each other. When the processor 1001 is a baseband processor, the baseband processor may be a second baseband unit BBU. The processor 1001 may be configured to implement various functions for the communication device 100. For example, the processor is configured to process a communication protocol and communication data; control the entire communication device 100, execute a software program, and process data of the software program; or assist in completing a computing processing task, for example, processing graphics and images or audio. Alternatively, the processor 1001 is configured to implement one or more of the foregoing functions.

In this embodiment, the memory 1002 is mainly configured to store the software program and the data. The memory 1002 may exist independently, and is connected to the processor 1001. Optionally, the memory 1002 may be integrated with the processor 1001, for example, integrated into one or more chips. The memory 1002 can store program code for executing the technical solutions in embodiments of this application, and the processor 1001 controls the execution. Various types of executed computer program code may also be considered as drivers of the processor 1001. It should be understood that FIG. 10 in this embodiment shows only one memory and one processor. However, in actual application, the communication device 100 may have a plurality of processors or a plurality of memories. This is not specifically limited herein. In addition, the memory 1002 may also be referred to as a storage medium, a storage device, or the like. The memory 1002 may be a storage element located in a same chip as the processor, namely, an on-chip storage element, or may be an independent storage element. This is not limited in embodiments of this application. In this embodiment, the transceiver 1003 may be configured to support receiving or sending of a radio frequency signal between the communication device 100 and another network device (for example, a first access network device or a first baseband unit BBU in the first access network device). The transceiver 1003 may be connected to the antenna 1004. The transceiver 1003 includes a transmitter Tx and a receiver Rx. Specifically, the one or more antennas 1004 may receive a radio frequency signal. The receiver Rx of the transceiver 1003 is configured to: receive the radio frequency signal from the antenna 1004, convert the radio frequency signal into a digital baseband signal or a digital intermediate frequency signal, and provide the digital baseband signal or the digital intermediate frequency signal for the processor 1001, so that the processor 1001 further processes (for example, demodulates or decodes) the digital baseband signal or the digital intermediate frequency signal. In addition, the transmitter Tx of the transceiver 1003 is further configured to receive a modulated digital baseband signal or digital intermediate frequency signal from the processor 1001, convert the modulated digital baseband signal or digital intermediate frequency signal into a radio frequency signal, and send the radio frequency signal through the one or more antennas 1004. Specifically, the receiver Rx may selectively perform one-level or multi-level down frequency mixing processing and analog-to-digital conversion processing on the radio frequency signal to obtain a digital baseband signal or a digital intermediate frequency signal, and a sequence of the down frequency mixing and the analog-to-digital conversion processing is adjustable. The transmitter Tx may selectively perform one or more levels of up-mixing processing and digital-to-analog conversion processing on the modulated digital baseband signal or the digital intermediate frequency signal to obtain a radio frequency signal, and a sequence of the up-mixing processing and the digital-to-analog conversion processing is adjustable. The digital baseband signal and the digital intermediate frequency signal may be collectively referred to as a digital signal.

It should be understood that the transceiver 1003 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. To be specific, the transceiver unit includes the receiving unit and the sending unit. The receiving unit may also be referred to as a receiver machine, a receiver, an input port, a receiver circuit, or the like, and the sending unit may also be referred to as a transmitter machine, a transmitter, an output port, a transmitter circuit, or the like.

In addition, the network interface 1005 is configured to connect the communication device 100 to another communication device through a communication link. Specifically, the network interface 1005 may include a network interface such as an S1 interface between the communication device 100 and a core network element. The network interface 1005 may also include a network interface such as an X2 or Xn interface between the communication device 100 and another network device (for example, another access network device or another core network element).

It should be understood that, the foregoing access network device may have functional units (means) corresponding to steps of a method or a procedure performed by an access network device. One or more of the foregoing modules or units may be implemented by using software, hardware, or a combination thereof. When any one of the foregoing modules or units is implemented by using software, the software exists in a form of computer program instructions, and is stored in a memory. A processor may be configured to execute the program instructions to implement the foregoing method procedure.

The processor in embodiments of this application may include but is not limited to at least one of the following: various computing devices that run software, for example, a central processing unit CPU, a microprocessor, a digital signal processor (digital signal processor, DSP), a microcontroller unit (micro controller unit, MCU), or an artificial intelligence processor. Each computing device may include one or more cores for executing software instructions to perform calculation or processing. The processor may be an independent semiconductor chip, or may be integrated with another circuit into a semiconductor chip, for example, may be integrated with another circuit (such as a codec circuit, a hardware acceleration circuit, or various bus and interface circuits) to form a system-on-a-chip (system-ona-chip, SoC), or may be integrated into the ASIC as a built-in processor of an application-specific integrated circuit (application specific integrated circuit, ASIC). The ASIC integrated with the processor may be independently packaged, or may be packaged together with another circuit. The processor includes a core configured to execute software instructions to perform calculation or processing, and may further include a necessary hardware accelerator, for example, a field programmable gate array (field programmable gate array, FPGA), a programmable logic device (programmable logic device, PLD), or a logic circuit that implements a special-purpose logic operation.

The memory in embodiments of this application may include at least one of the following types: a read-only memory ROM or another type of static storage device that can store static information and instructions, or a random access memory RAM or another type of dynamic storage device that can store information and instructions, or may be an electrically erasable programmable read-only memory (electrically erasable programmable read-only memory, EEPROM). In some scenarios, the memory may alternatively be a compact disc read-only memory (compact disc read-only memory, CD-ROM) or another compact disc storage medium, an optical disc storage medium (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory is not limited thereto.

The bus may further include a power bus, a control bus, a status signal bus, and the like, in addition to a data bus. However, for clear description, various types of buses in the figures are marked as the bus.

In an implementation process, the steps in the foregoing methods may be implemented by using a hardware integrated logic circuit in the processor, or by using instructions in a form of software. The steps in the methods disclosed with reference to embodiments of this application may be directly performed and completed by a hardware processor, or may be performed and completed by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be understood that, in embodiments of this application, same reference signs in different accompanying drawings may be considered as a same thing. Unless otherwise specially described in the foregoing embodiments, explanations of same reference signs in the foregoing accompanying drawings may be mutually referenced.

It should be understood that first, second, third, fourth, and various digital numbers in this specification are merely used for distinction for ease of description, but are not intended to limit the scope of embodiments of this application. It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be clearly understood by persons skilled in the art that, for the purpose of convenient and brief description, for a detailed working process of the foregoing system, apparatus, and unit, refer to a corresponding process in the foregoing method embodiment. Details are not described herein again.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. An access network system, comprising:
at least one first access network device and at least two second access network devices, wherein the first access network device comprises a first baseband unit BBU, and the second base station comprises a second baseband unit BBU, wherein
at least one first baseband unit BBU and at least two second baseband units BBUs are connected in series to form a closed loop;
the second baseband unit BBU is configured to determine a bandwidth requirement of the second access network device; and
the first baseband unit BBU is configured to: obtain, from a plurality of second baseband units BBUs, bandwidth requirements of second access network devices corresponding to the second baseband units BBUs, and determine a bandwidth available to each second access network device.

2. The access network system according to claim 1, wherein
the first baseband unit BBU is further configured to determine, based on the bandwidth available to each second access network device, a service data transmission path from at least one second access network device to the first access network device and service data between every two second access network devices on the path; and
the second baseband unit BBU is further configured to forward service data of the second access network device based on the service data transmission path.

3. The access network system according to claim 1 or 2, wherein
the first baseband unit BBU comprises a first universal main processing and transmission unit UMPT, and the second baseband unit BBU comprises a second universal main processing and transmission unit UMPT; and
that at least one first baseband unit BBU and at least two second baseband units BBUs are connected in series to form a closed loop comprises:
at least one first universal main processing and transmission unit UMPT and at least two second universal main processing and transmission units UMPTs are connected in series to form a closed loop.

4. The access network system according to any one of claims 1 to 3, wherein the first baseband unit BBU is connected to an aggregation-layer network device.

5. A first baseband unit BBU, comprising:
a control module and a transmission module, wherein
the control module is configured to: obtain, from a plurality of second baseband units BBUs, bandwidth requirements of second access network devices corresponding to the second baseband units BBUs, and determine a bandwidth available to each second access network device;
the control module is further configured to determine, based on the bandwidth available to each second access network device, a service data transmission path from at least one second access network device to a first access network device and service data between every two second access network devices on the path; and
the transmission module is configured to forward, based on the service data transmission path, service data to the second baseband unit BBU through a transmission interface.

6. The first baseband unit BBU according to claim 5, wherein the transmission module is further configured to send the service data to an aggregation-layer network device.

7. The first baseband unit BBU according to 5 or 6, wherein the first baseband unit BBU comprises a first universal main processing and transmission unit UMPT, and the transmission module and the control module are located in the first universal main processing and transmission unit UMPT.

8. The first baseband unit BBU according to claim 7, wherein the first universal main processing and transmission unit UMPT comprises at least three transmission interfaces.

9. A second baseband unit BBU, comprising:
a transmission module, wherein
the transmission module is configured to receive, through a first transmission interface, service data forwarded by a first baseband unit BBU; and
the transmission module is further configured to receive a forwarding instruction from a first access network device, and forward the service data to another second baseband unit BBU through a second transmission interface, wherein the forwarding instruction comprises a service data transmission path from the second baseband unit BBU to the first baseband unit BBU and service data between every two second access network devices on the path.

10. The second baseband unit BBU according to claim 9, wherein the second baseband unit BBU further comprises:
a control module, configured to determine a bandwidth requirement of a second access network device corresponding to the second baseband unit BBU; and
the transmission module is further configured to send the bandwidth requirement to the first baseband unit.

11. The second baseband unit BBU according to claim 9 or 10, wherein the second baseband unit BBU comprises a second universal main processing and transmission unit UMPT, and the transmission module and the control module are located in the second universal main processing and transmission unit UMPT.

12. The second baseband unit BBU according to claim 11, wherein the second universal main processing and transmission unit UMPT comprises at least three transmission interfaces, wherein the at least three transmission interfaces comprise the first transmission interface and the second transmission interface.

13. A transmission method, comprising:
obtaining, by a first baseband unit BBU from at least two second baseband units BBUs, bandwidth requirements of second access network devices corresponding to the second baseband units BBUs, wherein at least one first baseband unit BBU and the at least two second baseband units BBUs are connected in series to form a closed loop, the first baseband unit BBU is comprised in a first access network device, and the second baseband unit BBU is comprised in the second access network device; and
determining, by the first baseband unit BBU based on the bandwidth requirements of the at least two second access network devices, a bandwidth available to each second access network device.

14. The transmission method according to claim 13, wherein the method further comprises:
determining, by the first baseband unit BBU based on the bandwidth available to each second access network device, a service data transmission path from at least one second access network device to the first access network device and service data between every two second access network devices on the path; and
forwarding, by the first baseband unit BBU, service data of the second access network device based on the service data transmission path.

15. A transmission method, comprising:
sending, by a second baseband unit BBU, first data to a first baseband unit BBU; and
retransmitting, by the second baseband unit BBU, the first data to the first baseband unit BBU if the second baseband unit BBU does not receive, before a first timer expires, a response sent by the first baseband unit BBU, wherein duration of the first timer is determined by service data transmitted between the first baseband unit BBU and the second baseband unit BBU, and the service data comprises the first data.

16. The transmission method according to claim 15, wherein the method further comprises:
restarting, by the second baseband unit BBU, the first timer when the second baseband unit BBU retransmits the first data to the first baseband unit BBU.

17. The transmission method according to claim 16, wherein after the restarting, by the second baseband unit BBU, the first timer, the method further comprises:
stopping the first timer when the second baseband unit BBU receives a first response sent by the first baseband unit BBU, wherein the first response is used to indicate to stop the first timer.

18. The transmission method according to any one of claims 15 to 17, wherein before the sending, by a second baseband unit BBU, first data to a first baseband unit BBU, the method further comprises:
receiving, by the second baseband unit BBU, a forwarding instruction from the first baseband unit BBU, wherein the forwarding instruction comprises a service data transmission path from the second baseband unit BBU to the first baseband unit BBU and service data between every two second access network devices on the path; and
determining, by the second baseband unit BBU, the duration of the first timer according to the forwarding instruction.

19. Atransmission method, comprising:
receiving, by a first baseband unit BBU, first data from a second baseband unit BBU;
sending, by the first baseband unit BBU, the first data to an aggregation-layer network device; and
sending, by the first baseband unit, a first response to the second baseband unit BBU, wherein the first response is used to indicate that the first baseband unit BBU has sent the first data to the aggregation-layer network device.

20. The transmission method according to claim 19, wherein the method further comprises:
sending, by the first baseband unit BBU, a forwarding instruction to the second baseband unit BBU, wherein the forwarding instruction comprises a service data transmission path from the second baseband unit BBU to the first baseband unit BBU and service data between every two second access network devices on the path, so that the second baseband unit BBU determines duration of a first timer according to the forwarding instruction, wherein the duration of the first timer is determined based on service data transmitted between the first baseband unit BBU and the second baseband unit BBU, and the service data comprises the first data.
